# EUROPÄISCHE PATENTSCHRIFT

(11) **EP 2 740 188 B1**
(45) Veröffentlichungstag und Bekanntmachung des Hinweises auf die Patenterteilung: **09.09.2015**
(21) Anmeldenummer: 12735834.9
(22) Anmeldetag: 09.07.2012
(51) Int. Cl.: H02G 3/22

(54) **Anordnung mit einer Durchführungsvorrichtung durch ein Metallblech für mindestens ein Elektroverbindungselement zu einer elektronischen Schaltung**
Arrangement with a lead-through device through a metal plate for at least one electrical connection element to form an electronic circuit
Système avec un dispositif de traversée d'une tôle métallique pour au moins un élément de connexion électrique à un circuit électronique

(30) Priorität: 02.08.2011 DE 102011080277
(43) Veröffentlichungstag der Anmeldung: 11.06.2014
(73) Patentinhaber: Robert Bosch GmbH, 70442 Stuttgart (DE)
(72) Erfinder: OFFTERDINGER, Joerg, 70437 Stuttgart (DE); KIENZLE, Rainer, 71739 Oberriexingen (DE); BUSS, Heiko, 77815 Buehl (DE); KIMMICH, Peter, 71101 Schoenaich (DE); ER, Abdullah, 75428 Illingen (DE); BECK, Walter, 88524 Uttenweiler (DE)
(86) Internationale Anmeldenummer: PCT/EP2012/063380
(87) Internationale Veröffentlichungsnummer: WO 2013/017376

(56) Entgegenhaltungen:
- DE-A1-102007 022 585
- DE-T2- 69 508 145
- GB-A- 2 067 683

## Beschreibung

### Stand der Technik

Die Erfindung betrifft eine Durchführungsvorrichtung durch ein Metallblech für mindestens ein Elektroverbindungselement zu einer elektronischen Schaltung. Dabei kann das mindestens eine Elektroverbindungselement ein Signalkabel oder ein Versorgungskabel oder ein metallischer Leiter zur Übertragung von Signalen oder Leistungsströmen aus oder in ein Gehäuse sein.

Aus der Druckschrift DE 10 2007 022 585 A1 ist dazu eine Leitungsdurchführung durch einen Deckel eines Tanks bekannt. Durch den Tankdeckel werden Edelstahllitzen oder elektrische Leitungen durch ein separates Dichtelement hindurchgeführt. Das separate Dichtelement ist als elastischer Steckdichtstopfen ausgebildet, der Stopföffnungen aufweisen kann, in denen die elektrischen Leitungen aufgenommen werden können. Der Steckdichtstopfen ist unmittelbar in den Tankdeckel eingesteckt und kann sich nicht selbständig lösen. Die Verbindung zwischen dem Deckel und dem Steckdichtstopfen wird mittels Klemmen oder Pressen gewährleistet. Der Steckdichtstopfen weist einen Querschnitt auf, der umlaufende Dichtflächen bereitstellt, welche die Dichtwirkung des Steckdichtstopfens in einer Durchführungsöffnung des Tankdeckels gewährleisten.

Darüber hinaus offenbart die Druckschrift DE 23 21 154 eine abdichtende Wanddurchführung für ein Kabel, eine Rohrleitung oder dgl., die unter anderem für die Spritzwände von Kraftfahrzeugen vorgesehen sind. Die Wanddurchführung umfasst dabei eine Hülse und zwei Abdeckflansche. Mindestens einer der Abdeckflansche ist hinterschnitten ausgeführt. An einem Ende der Hülse ist eine Öffnung mit einem kegelstumpfförmigen Ansatz und einem Verriegelungsschlitz ausgebildet. Der Verriegelungsschlitz befestigt die Wanddurchführung an der Trennwand, durch die ein Kabel, eine Rohrleitung oder dgl. durchgeführt wird. Die Wanddurchführung gewährleistet eine gute Abdichtung gegen Fluide und Schallwellen. Auch in diesem zweiten Dokument wird eine separate Dichtung eingesetzt, um ein mediendichtes Abdichten zu gewährleisten und um Kabel oder Rohrleitungen durch eine Wand hindurchzuführen.

Eine herkömmliche Durchführungsanordnung ist in DE 695 08 145 T2 offenbart.

### Offenbarung der Erfindung

Mit der Erfindung wird eine Durchführungsvorrichtung durch ein Metallblech für mindestens ein Elektroverbindungselement zu einer elektronischen Schaltung geschaffen. Dabei weist die Durchführungsvorrichtung einen Dichtbereich auf, der einen scheibenförmigen Dichtelementrandbereich und einen zentralen Durchführungsbereich hat. Die Durchführungsvorrichtung ist bevorzugt aus einem thermoplastische Eigenschaften aufweisenden Kunststoffmaterial gefertigt. Der zentrale Durchführungsbereich umschließt das mindestens eine Elektroverbindungselement mediendicht. Ein Öffnungsrandbereich einer Durchführungsöffnung in dem Metallblech ist mediendicht dem Dichtelementrandbereich angepasst. Der Öffnungsrandbereich der Durchführungsöffnung umschließt mit Presssitz das Elektroverbindungselement, so dass eine mediendichte Durchführung entsteht. Ein zylinderförmiger Abschnitt des Dichtelements in dem Dichtelementrandbereich weist einen Außendurchmesser auf, der größer als der Innendurchmesser der Durchführungsöffnung ist, so dass der zylinderförmige Abschnitt in der Durchführungsöffnung einen Presssitz bildet.

Der zylinderförmige Abschnitt steht mit dem Öffnungsrandbereich der Durchführungsöffnung im Eingriff. Dazu ist die Durchführungsvorrichtung mit eingebetteten Elektroverbindungselementen in die Durchführungsöffnung eingepresst oder eingeprellt, um den Presssitz in der Durchführungsöffnung zu realisieren. Um den fertigungstechnischen Gegebenheiten bei der Herstellung aus Kunststoffmaterial Rechnung zu tragen, sind unterschiedliche Wanddicken des Kunststoffmaterials vorgesehen.

Durch die Geometrie des Metallbleches (Einprellbereich) und deren nachgiebige Ausführung wird erreicht, dass die Durchführungsvorrichtung relativ einfach und zeitsparend montiert werden kann, ohne dass eine Nachstellung oder Nachjustierung oder eine Ausrichtung des mindestens einen Elektroverbindungselements beim Einpressen oder Einprellen des Dichtelements in die Durchführungsöffnung erforderlich wird. Durch die höhere Dicke des zentralen Durchführungsbereichs wird gewährleistet, dass die Position des mindestens einen Durchführungselements beabstandet von dem Öffnungsrandbereich stabilisiert ist.

Das Metallblech kann als Deckel geformt sein, der in einem entsprechend vorgesehenen Bereich eines Gehäuses oder eines Behälters einsetzbar ist. Während der Öffnungsrandbereich somit nachgiebig und einpressbar ist, ist die Durchführungsvorrichtung mit dem mindestens einen Elektroverbindungselement relativ massiv und stabil, um das Elektroverbindungselement in einer vorgegebenen Position und Ausrichtung zu halten und zu fixieren.

Außerdem ist es vorgesehen, dass der zylinderförmige Abschnitt des Dichtelements einen Positionierungsabsatz aufweist, der eine axiale Position des Öffnungsrandbereichs mit der Durchführungsöffnung auf dem zylinderförmigen Abschnitt des Dichtelements definiert.

Erfindungsgemäß weist die Durchführungsöffnung in dem Öffnungsrandbereich einer gebördelten, kreisrunden Rand auf.

### Vorteile der Erfindung

Die Erfindung zeichnet sich dadurch aus, dass die Durchführungsvorrichtung ein einfaches Einpressen oder Einprellen in eine Durchführungsöffnung in einen nachgiebigen Randbereich eines Metallblechs, wie eines Blechdeckels beispielsweise eines Gehäuses, ermöglicht.

Mittels der Erfindung können ohne Vorjustage und Ausrichtung von Kabeln oder Signalleitungen oder von Kontaktstiften in einem Dichtungskörper oder einem Dichtungselement Durchführungen für Metallbleche sicher und mediendicht realisiert werden.

Die Erfindung erweitert somit den Nutzen und den Gebrauch von Durchführungen in der Kraftfahrzeugkonstruktion, da Kabel eines Kabelbaums durch Blechgehäuse und Blechdeckel hin durchgeführt werden können, was mit bisherigen Durchführungsvorrichtungen, die keine teilweise Einbettung der durchzuführenden Leitungen und Kabel bzw. Kontaktstifte in eine elastische Dichtungsmasse vorsehen, mit erheblichem Montageaufwand und Montagekosten verbunden ist.

Die erfindungsgemäße Struktur der Durchführungsvorrichtung im Dichtelementrandbereich hat den Vorteil eines definierten Dichtungsbereichs zwischen dem Kunststoff des Dichtelementrandbereichs und dem Öffriungsrandbereich am Metallblech, so dass keine zusätzliche ringförmige Dichtung erforderlich ist und somit eine Reduzierung der eingesetzten Materialien und eine Reduktion von kritischen Schnittstellen von mediendichten Verbindungen möglich wird. Auch die Empfindlichkeit gegenüber Verunreinigungen der Schnittstellenpartner ist deutlich verringert, da einerseits das mindestens eine Elektroverbindungselement teilweise in die Kunststoffmasse eingebettet ist und andererseits nur ein einziger ringförmiger Übergang zwischen dem Metallblech der Durchführungsöffnung und dem Dichtelementrandbereich vorgesehen ist.

Die Erfindung ermöglicht in vorteilhafter Weise Anwendungen im Kraftfahrzeugbereich, wie bei dem Einsatz für elektronische Schaltungen beispielsweise in einem Steuergerät für Fahrzeuglüfter. Dabei kann auf der Schaltungsplatine für derartige Steuergeräte die Durchführungsvorrichtung angeordnet sein, indem in vorteilhafter Weise Kontaktpins nicht nur auf der Schaltungsplatine angeordnet sind, sondern auch durch die Durchführungsvorrichtung, eingebettet in dem Durchführungsbereich des Dichtelements hindurchragen, wie es die nachfolgenden Figuren zeigen.

### Kurze Beschreibung der Zeichnungen

Weitere Aspekte und Vorteile der Erfindung werden nunmehr anhand der beigefügten Figuren eingehender beschrieben. Hierbei zeigt:
- Fig. 1: eine schematische perspektivische Draufsicht auf einen Metalldeckel mit einer Durchführungsvorrichtung gemäß einer Ausführungsform der Erfindung;
- Fig. 2: einen schematischen Querschnitt durch die Durchführungsvorrichtung gemäß Figur 1.

### Ausführungsformen der Erfindung

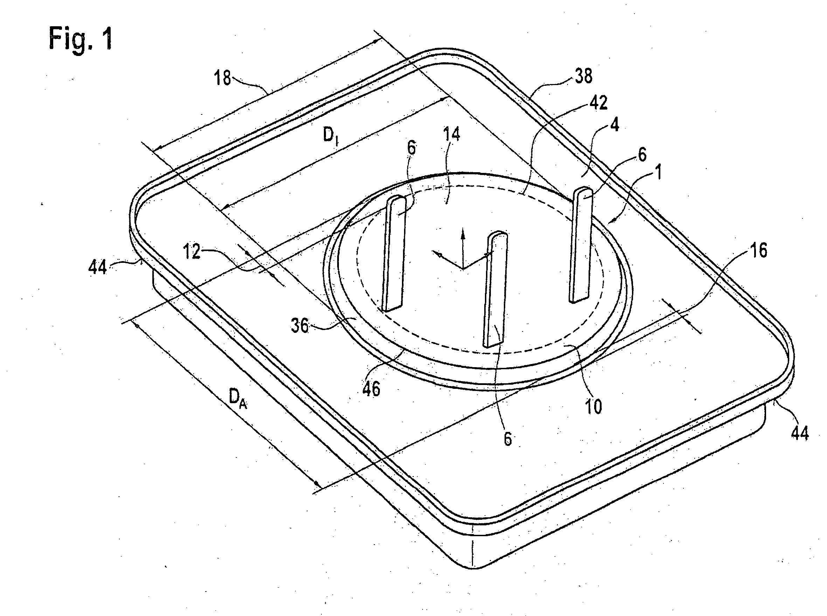

Figur 1 zeigt eine schematische perspektivische Draufsicht auf einen Metalldeckel 38 mit einer Durchführungsvorrichtung 1 gemäß einer Ausführungsform der Erfindung. Der Metalldeckel 38 ist aus einem Metallblech 4 geformt und weist eine Durchführungsöffnung 18 auf, in welche ein Dichtelement 10 mit seinem Dichtelementrandbereich 12 in einen Öffnungsrandbereich 16 des Metalldeckels 38 eingepresst bzw. eingeprellt ist.

Ein Innendurchmesser D_{I} der Durchführungsöffnung 18 ist dazu geringer als ein Außendurchmesser D_{A} des scheibenförmigen Dichtelements 10. In einem zentralen Durchführungsbereich 14 des Dichtelements 10, dessen Grenze hier mit einer gestrichelten Linie 42 markiert ist, sind drei Elektroverbindungselemente 6 in Form von Kontaktstiften angeordnet, die teilweise in dem Dichtelement 10 eingebettet und ausgerichtet sind.

Das Dichtelement 10 kann mit den Kontaktstiften und einer hier nicht sichtbaren angeschlossenen Schaltungsplatine von der Unterseite 44 des Metalldeckels 38 aus in die Durchführungsöffnung 18 eingeführt werden, wozu der ringförmige Rand 46 des Dichtelements 10 eine Fase 36 aufweist. Die Fase 36 erleichtert das Einprellen oder das Einpressen des Metalldeckels 38 in das scheibenförmige Dichtelement 10 im Öffnungsrandbereich 10.

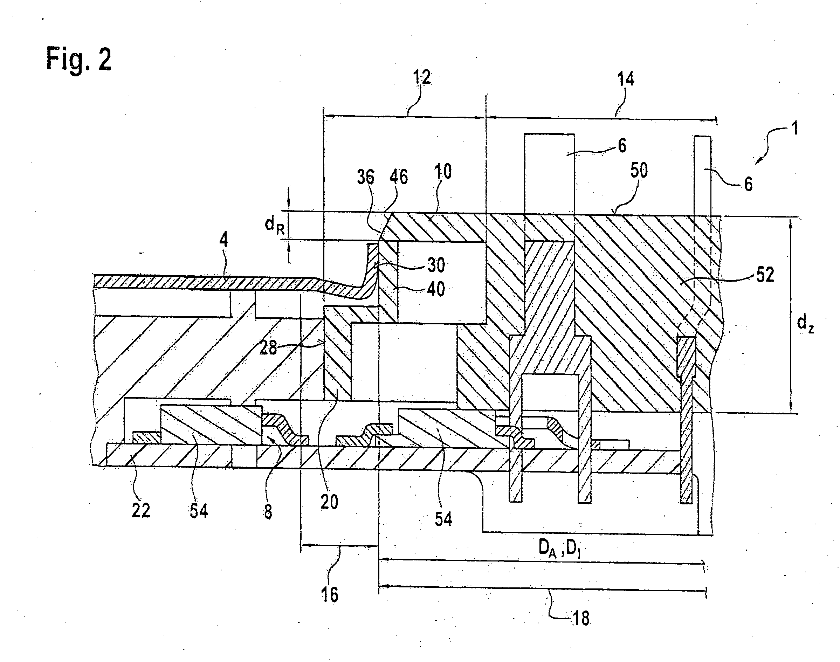

Figur 2 zeigt einen schematischen Querschnitt durch die Durchführungsvorrichtung 1 gemäß Figur 1. In dieser Ausführungsform werden Kontaktstifte als Elektroverbindungselemente 6 von einer Schaltungsplatine 22 ausgehend durch den Durchführungsbereich 14 des scheibenförmigen Dichtelements 10 zu einer Oberseite 50 des Durchführungsbereichs 14 des Dichtelements 10 geführt, wobei die Elektroverbindungselemente 6 teilweise in die Kunststoffmasse 52 des Durchführungsbereichs 14 eingebettet sind. Die Elektroverbindungselemente 6 stehen als Kontaktstifte mit Schaltungselementen 54 einer elektronischen Schaltung 8 auf der Schaltungsplatine 22 elektrisch in Verbindung.

Zur mediendichten Abdichtung der Schaltungsplatine 22 weist das Dichtelement 10 neben dem zentralen Durchführungsbereich 14 einen Dichtelementrandbereich 12 auf, der als topfförmiger Dichtelementbereich 40 gestaltet ist, wobei der topfförmige Dichtelementbereich 40 eine Dicke d_{R} aufweist, die deutlich geringer ist als die Dicke d_{Z} des zentralen Durchführungsbereichs 14 für die Elektroverbindungselemente 6. Dieser topfförmige Dichtelementbereich 40 besteht im Wesentlichen aus dem scheibenförmigen Dichtelement 10 und einem im Dichtelementrandbereich 12 sich anschließenden zylinderförmigen Abschnitt 20 mit einem Außenmantel 28. In diesen Außenmantel 28 ist der topfförmige Dichtelementbereich 40 angebracht, in welchem der Öffnungsrandbereich 16 des Metalldeckels 38 aus Metallblech 4 montiert ist.

Der Öffnungsrandbereich 16 weist ein Krümmungsprofil 30 auf, das ringförmig mit einem Innendurchmesser D_{I}, welcher geringfügig kleiner als der Außendurchmesser D_{A} des zylinderförmigen Abschnitts 20 im Bereich Dichtelementbereich 40 ist, mediendicht zusammen wirkt. Durch die Fase 36 an einem ringförmigen Außenrand 46 des scheibenförmigen Dichtelements 10 wird das Fügen des Öffnungsrandbereiches 16 in die hier gezeigte Arretierungsposition der Durchführungsvorrichtung 1 erleichtert.

Die Erfindung ist nicht auf das hier beschriebene Ausführungsbeispiel und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Anordnung zur Durchführung mindestens eines Elektroverbindungselements (6), umfassend einen Metalldeckel (38), der aus einem Metallblech (4) geformt ist und eine Durchführungsöffnung (18) aufweist und eine Durchführungsvorrichtung, die Durchführungsvorrichtung umfassend:
- ein Dichtelement (10), das einen scheibenförmigen Dichtelementrandbereich (12) aufweist und einen zentralen Durchführungsbereich (14) hat, der das mindestens eine Elektroverbindungselement (6) mediendicht umschließt,
- einen Öffnungsrandbereich (16) einer Durchführungsöffnung (18) in dem Metallblech (4), die mediendicht dem Dichtelementrandbereich (12) angepasst ist,
- einen zylinderförmigen Abschnitt (20) des Dichtelements (10) in dem Dichtelementrandbereich (12), dessen Außendurchmesser (D_{A}) größer als ein Innendurchmesser (D_{I}) der Durchführungsöffnung (18) ist, und wobei der zylinderförmige Abschnitt (20) in der Durchführungsöffnung (18) einen Presssitz aufweist, und wobei der zylinderförmige Abschnitt (20) einen topfförmigen Dichtelementbereich (40) aufweist, die in dem Öffnungsrandbereich (16) mit der Durchführungsöffnung (18) in Eingriff steht,
**dadurch gekennzeichnet, dass** die Durchführungsöffnung (18) in dem Öffnungsrandbereich (16) einen gebördelten, kreisrunden Rand aufweist.

2. Anordnung nach Anspruch 1, wobei eine Dicke (d_{R}) des Dichtelements (10) in dem Dichtelementrandbereich (12) und in dem zylinderförmigen Abschnitt (20) geringer ist als eine Dicke (d_{Z}) des Dichtelements (10) in dem zentralen Durchführungsbereich (14), in dem das mindestens eine Elektroverbindungselement (6) angeordnet ist.

3. Anordnung nach Anspruch 1 oder Anspruch 2, wobei das Dichtelement (10) in dem zentralen Durchführungsbereich (14) einen massiven Pfropfen bildet, in dem das mindestens eine Elektroverbindungselement (6) mindestens teilweise eingebettet ist, und wobei das Dichtelement (10) in dem Dichtelementrandbereich (12) mit dem zylinderförmige Abschnitt (20) derart ausgebildet ist, dass der Dichtelementrandbereich (12) einen im Querschnitt topfförmigen Dichtelementrandbereich (12) aufweist.

4. Anordnung nach Anspruch 2 oder Anspruch 3, wobei die Dicke (d_{Z}) des Dichtelements (10) in dem zentralen Durchführungsbereich (14) mindestens ein Dreifaches einer Dicke (d_{R}) des Dichtelements (10) in dem Dichtelementrandbereich (12) und in dem zylinderförmigen Abschnitt (20) aufweist.

5. Anordnung nach einem der vorhergehenden Ansprüche, wobei der Öffnungsrandbereich (16) der Durchführungsöffnung (18) ein Krümmungsprofil (30) aufweist, das mit dem zylinderförmige Abschnitt (20) mediendicht zusammenwirkt.

6. Anordnung nach einem der vorhergehenden Ansprüche, wobei der zylinderförmige Abschnitt (20) des Dichtelements (10) einen Positionierungsabsatz (32) aufweist, der eine axiale Position des Öffnungsrandbereichs (16) mit der Durchführungsöffnung (18) auf dem zylinderförmigen Abschnitt (20) definiert.

## Claims

1. Arrangement for leading through at least one electrical connection element (6), comprising a metal cover (38) which is formed from a metal sheet (4) and has a leadthrough opening (18) and a leadthrough apparatus, the leadthrough apparatus comprising:
- a sealing element (10) which has a disc-like sealing element edge region (12) and a central leadthrough region (14) which surrounds the at least one electrical connection element (6) in a media-tight manner,
- an opening edge region (16) of a leadthrough opening (18) in the metal sheet (4), which opening edge region is matched to the sealing element edge region (12) in a media-tight manner,
- a cylindrical section (20) of the sealing element (10) in the sealing element edge region (12), the outside diameter (D_{A}) of the said cylindrical section being larger than an inside diameter (D_{I}) of the leadthrough opening (18), and wherein the cylindrical section (20) has a press-fit in the leadthrough opening (18), and wherein the cylindrical section (20) has a pot-like sealing element region (40) which engages with the leadthrough opening (18) in the opening edge region (16),
**characterized in that** the leadthrough opening (18) has a beaded, circular edge in the opening edge region (16) .

2. Arrangement according to Claim 1, wherein a thickness (d_{R}) of the sealing element (10) in the sealing element edge region (12) and in the cylindrical section (20) is smaller than a thickness (d_{Z}) of the sealing element (10) in the central leadthrough region (14) in which the at least one electrical connection element (6) is arranged.

3. Arrangement according to Claim 1 or Claim, 2, wherein the sealing element (10) forms a solid plug in the central leadthrough region (14), the at least one electrical connection element (6) being at least partially embedded in the said solid plug, and wherein the sealing element (10) is formed with the cylindrical section (20) in the sealing element edge region (12) in such a way that the sealing element edge region (12) has a sealing element region (40) which has a pot-like cross section.

4. Arrangement according to Claim 2 or Claim 3, wherein the thickness (d_{Z}) of the sealing element (10) in the central leadthrough region (14) has at least three times the thickness (d_{R}) of the sealing element (10) in the sealing element edge region (12) and in the cylindrical section (20).

5. Arrangement according to one of the preceding claims, wherein the opening edge region (16) of the leadthrough opening (18) has a curvature profile (30) which interacts with the cylindrical section (20) in a media-tight manner.

6. Arrangement according to one of the preceding claims, wherein the cylindrical section (20) of the sealing element (10) has a positioning projection (32) which defines an axial position of the opening edge region (16) with the leadthrough opening (18) on the cylindrical section (20).

## Revendications

1. Agencement de traversée d'au moins un élément de connexion électrique (6), comprenant un couvercle métallique (38) formé d'une tôle métallique (4) et qui présente une ouverture de traversée (18), et un dispositif de traversée, le dispositif de traversée comprenant :
- un élément d'étanchéité (10) qui présente une région de bord d'élément d'étanchéité en forme de disque (12) et une région de traversée centrale (14) qui entoure l'au moins un élément de connexion électrique (6) de manière étanche aux fluides,
- une région de bord d'ouverture (16) d'une ouverture de traversée (18) dans la tôle métallique (4), qui est adaptée à la région de bord d'élément d'étanchéité (12) de manière étanche aux fluides,
- une portion cylindrique (20) de l'élément d'étanchéité (10) dans la région de bord d'élément d'étanchéité (12), dont le diamètre extérieur (D_{A}) est supérieur à un diamètre intérieur (D_{I}) de l'ouverture de traversée (18), la portion cylindrique (20) dans l'ouverture de traversée (18) présentant un ajustement serré, et la portion cylindrique (20) présentant une région d'élément d'étanchéité (40) en forme de pot, qui est en prise dans la région de bord d'ouverture (16) avec l'ouverture de traversée (18),
**caractérisé en ce que** l'ouverture de traversée (18) dans la région de bord d'ouverture (16) présente un bord circulaire rond rabattu.

2. Agencement selon la revendication 1, dans lequel une épaisseur (d_{R}) de l'élément d'étanchéité (10) dans la région de bord d'élément d'étanchéité (12) et dans la portion cylindrique (20) est inférieure à une épaisseur (d_{Z}) de l'élément d'étanchéité (10) dans la région de traversée centrale (14) dans laquelle est disposé l'au moins un élément de connexion électrique (6).

3. Agencement selon la revendication 1 ou la revendication 2, dans lequel l'élément d'étanchéité (10) forme dans la région de traversée centrale (14) un bouchon massif dans lequel est noyé au moins en partie l'au moins un élément de connexion électrique (6), et dans lequel l'élément d'étanchéité (10) dans la région de bord d'élément d'étanchéité (12) avec la portion cylindrique (20) est réalisé de telle sorte que la région de bord d'élément d'étanchéité (12) soit une région d'élément d'étanchéité (40) de section transversale en forme de pot.

4. Agencement selon la revendication 2 ou la revendication 3, dans lequel l'épaisseur (d_{Z}) de l'élément d'étanchéité (10) dans la région de traversée centrale (14) représente au moins le triple d'une épaisseur (d_{R}) de l'élément d'étanchéité (10) dans la région de bord d'élément d'étanchéité (12) et dans la portion cylindrique (20) .

5. Agencement selon l'une quelconque des revendications précédentes, dans lequel la région de bord d'ouverture (16) de l'ouverture de traversée (18) présente un profil de courbure (30) qui coopère de manière étanche aux fluides avec la portion cylindrique (20).

6. Agencement selon l'une quelconque des revendications précédentes, dans lequel la portion cylindrique (20) de l'élément d'étanchéité (10) présente un épaulement de positionnement (32) qui définit une position axiale de la région de bord d'ouverture (16) avec l'ouverture de traversée (18) sur la portion cylindrique (20).
